# EUROPÄISCHE PATENTSCHRIFT

(11) **EP 1 686 007 B1**
(45) Veröffentlichungstag und Bekanntmachung des Hinweises auf die Patenterteilung: **08.09.2010**
(21) Anmeldenummer: 06100480.0
(22) Anmeldetag: 17.01.2006
(51) Int. Cl.: B60Q 1/48, B60Q 9/00

(54) **Verfahren zur akustischen Ausgabe einer Information**
Methode for acoustically delivering an information
Procédé sonore de diffusion d'information

(30) Priorität: 31.01.2005 DE 102005004334
(43) Veröffentlichungstag der Anmeldung: 02.08.2006
(73) Patentinhaber: ROBERT BOSCH GMBH, 70442 Stuttgart (DE)
(72) Erfinder: Grabsch, Hans-Peter, 71034, Boeblingen (DE); Danz, Christian, 70469, Stuttgart (DE); Roßmeier, Markus, 56170, Benndorf (DE)

(56) Entgegenhaltungen:
- EP-A- 1 484 620
- EP-A- 1 553 009
- EP-A1- 0 664 995
- EP-A2- 1 238 892
- EP-A2- 1 488 956
- WO-A-02/075354
- DE-A1-102005 049 881
- JP-A- 7 325 787
- US-A- 3 391 340

## Beschreibung

### Stand der Technik

Die Erfindung geht aus von einem Verfahren zur akustischen Ausgabe einer Information, insbesondere in einem Fahrzeug nach der Gattung des Hauptanspruchs. Im Fahrzeug sind bereits zahlreiche verschiedene Warnausgaben für einen Fahrer bekannt. So ist es z.B. bekannt, auf Fehlfunktionen durch Warnleuchten, gegebenenfalls auch durch ein Blinken solcher Warnleuchten in einem Kombinationsinstrument hinzuweisen. Ferner ist es auch bekannt, durch einen oft als unangenehm empfundenen Warnton auf Fehlfunktionen hinzuweisen. Dies gilt auch für beliebige andere elektronische Geräte, bei denen Fehlfunktionen oftmals zu der Ausgabe von Warntönen führen. Gegenüber rein optischen Ausgaben haben akustische Ausgaben dabei den Vorteil, dass sie einen Benutzer auch dann erreichen können, wenn er keinen Blickkontakt zu der Vorrichtung unterhält, die die entsprechende Warnung ausgibt. Es ist ferner aus dem Computerbereich bekannt, bestimmten Fehlern entsprechende Warntöne zuzuordnen. So ist es z. B. einem Benutzer von Computerbetriebssystemen im Allgemeinen möglich, jeweiligen Fehlern bestimmte akustische Warnsignale selbst zuzuordnen. Ihm steht hierbei eine Vielzahl möglicher Warntöne zur Verfügung. Diese Warntöne selbst sind jedoch im Allgemeinen nicht intuitiv erfassbar und müssen durch den Benutzer erst erlernt werden. Oftmals ist es dabei für den Benutzer nicht unmittelbar erkennbar, dass es sich bei dem jeweiligen Warnton tatsächlich um einen Hinweis auf einen Fehler handelt, da er eine entsprechende Assoziation nicht herstellen kann. Kaum möglich ist es darüber hinaus, dem Benutzer gegebenenfalls mittels solcher akustischen Signale eine positive Rückmeldung zu seinem Verhalten zu geben. Die Vielfalt der verschiedenen akustischen Signale führt zu einer Verwirrung und zu einer Überlastung des Benutzers, so dass möglicherweise eine akustische Warnung abgelehnt oder sogar deaktiviert wird. Eine solche Deaktivierung wäre insbesondere dann nachteilig, wenn ein Benutzer seinen Blick auf andere Funktionen konzentriert, sodass ihn Warnungen, obwohl sie bereitgestellt werden, nicht erreichen können.

Aus der EP 148 89 56 A2 ist ein Alarmsystem für ein Fahrzeug bekannt, das ein sich einem Fahrzeug nähernde Gefahr erfasst. Eine Mehrzahl von Lautsprechern im Fahrzeug erzeugen ein Alarmsignal zur Darstellung derjenigen Richtung, aus der sich die Gefahr auf das Fahrzeug zubewegt. Lautstärke, Melodie und Frequenz des ausgegebenen Warnsignals können dabei variiert werden.

### Vorteile der Erfindung

Das erfindungsgemäße Verfahren zur akustischen Ausgabe einer Information mit den Merkmalen des Hauptanspruchs hat demgegenüber den Vorteil, dass dem Benutzer eine akustische Rückmeldung gegeben wird, die er intuitiv erfassen kann. Hierbei wird ausgenutzt, dass im Allgemeinen das Empfinden für die Harmonie von Klängen bzw. von Klangfolgen bei vielen Menschen zumindest sehr ähnlich ist. Indem die Harmonie eines Klanges in Abhängigkeit von einer Kritizität einer auszugebenden Information gewählt wird, wird eine intuitive Erfassung für einen Benutzer möglich, wie kritisch die jeweilige Situation tatsächlich ist. Unter dem Ausdruck Kritizität ist hierbei ein Maß dafür zu verstehen, wie wichtig bzw. wie dringend ein Eingreifen eines Benutzers ist, um Schaden von ihm oder einer von ihm zu betreuenden Einrichtung abzuhalten. Weist eine Situation eine hohe Kritizität auf, so bedeutet dies, dass entweder ein in der Situation Verantwortlicher, so z.B. ein Fahrzeugführer, unbedingt und gegebenenfalls auch sehr schnell regieren muss. Ist die Kritizität niedrig, so kann eine Reaktion auch noch zu einem späteren Zeitpunkt erfolgen, wobei jedoch bereits vorsichtig gehandelt werden sollte. Indem ein Benutzer unmittelbar ein Gefühl für die Harmonie des ausgegebenen Tones mitbringt, kann er die Kritizität beurteilen, ohne dass er eine Einlernphase für das zu steuernde System benötigt. Er kann bei der ersten

Benutzung bereits unmittelbar erfassen, ob ein Eingreifen erforderlich ist bzw. wie kritisch eine aktuelle Situation ist.

Besonders vorteilhaft ist es, mit zunehmender Kritizität einer Situation eine Dissonanz des ausgegebenen Klangs zunehmen zu lassen. Insbesondere kann hiermit durch den immer unangenehmeren Ton ein benutzer auf die besondere Kritizität der Situation deutlicher hingewiesen werden.

Durch die in den Unteransprüchen aufgeführten Maßnahmen sind vorteilhafte Weiterbildungen und Verbesserungen des im Hauptanspruch angegebenen Verfahrens zur akustischen Ausgabe einer Information möglich.

Erfindungsgemäß erfolgt eine Verwendung für eine Ausmessung einer Parklücke, wobei ein Benutzer anhand der Harmonie bzw. Dissonanz des ausgegebenen Tons hören kann, ob sein Fahrzeug in die Parklücke hineinpassen wird oder nicht, ohne eine Anzeige betrachten zu müssen.

Bevorzugt kann die Bedeutung des ausgegebenen Klangs dadurch gesteigert werden, dass mit zunehmender Kritizität die Widerholrate und/oder die Lautstärke des auszugebenden Klangs zunimmt. Hierdurch wird der Warncharakter der ausgegebenen Information gesteigert. Zudem kann auch die Tonhöhe in Abhängigkeit von der jeweiligen Situation verändert werden, in der das Intervall ausgegeben wird. Hierdurch kann zusätzlich zu der über den Grad der Dissonanz vermittelten Information eine Information mittels der Tonhöhe ausgegeben werden. Durch einen besonders hohen Klang kann z.B. der Warncharakter des Klangs verstärkt werden.

### Zeichnung

Ausführungsbeispiele der Erfindung sind in der Zeichnung dargestellt und in der nachfolgenden Beschreibung näher erläutert. Es zeigen
Figur 1 eine Warneinrichtung zur Durchführung des erfindungsgemäßen Verfahrens zur akustischen Ausgabe,
Figur 2 ein erstes Anwendungsbeispiel für die Durchführung eines erfindungsgemäßen Verfahrens anhand einer Parklückenlängenvermessung,
Figur 3 ein Ausführungsbeispiel für eine Anwendung eines nicht erfindungsgemäßen Verfahrens für einen Einparkvorgang.

### Beschreibung des Ausführungsbeispiels

Die vorliegende Erfindung kann einen Fahrer dadurch entlasten, dass es ihm intuitiv erfassbar Informationen über eine Parklückenlänge ausgibt, die er akustisch wahrnehmen kann. Im Folgenden wird die vorliegende Erfindung anhand der Durchführung des erfindungsgemäßen Verfahrens am Beispiel einer Verwendung für eine Parkhilfevorrichtung in einem Kraftfahrzeug erläutert.

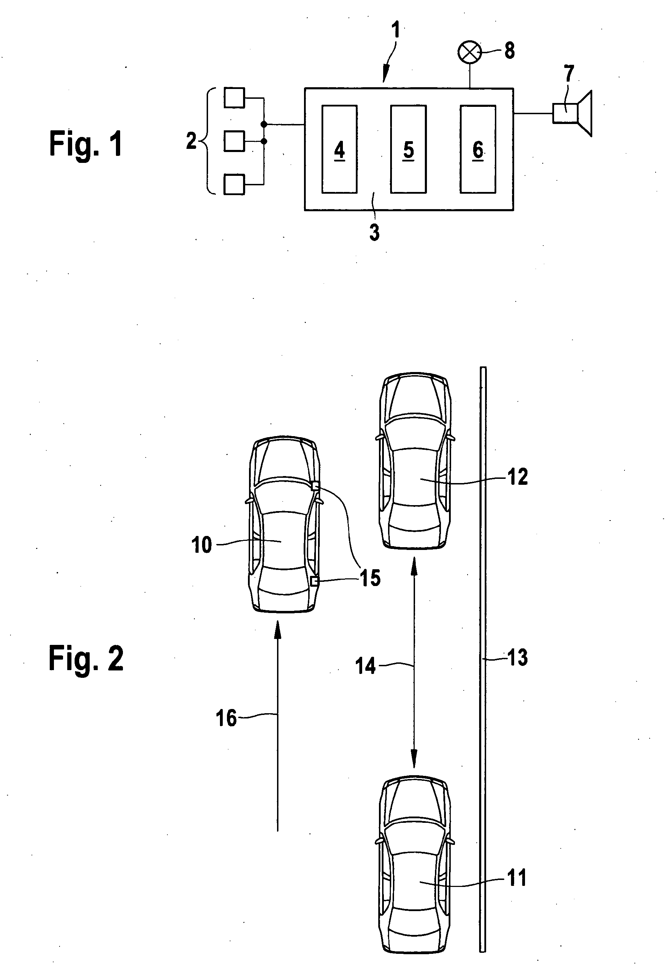

In der Figur 1 ist eine erfindungsgemäße Fahrerwarneinrichtung 1 zur Unterstützung des Fahrers bei einem Einparkvorgang mit einem Kraftfahrzeug erläutert. An dem Fahrzeug sind an den Fahrzeugaußenkonturen Abstandsmesssensoren 2 angeordnet, z. B. Ultraschallsensoren oder Radarsensoren. Die Abstandsmesssensoren 2 messen einen Abstand zu Hindernissen in der Fahrzeugumgebung und übertragen den gemessenen Abstand an eine Auswerteeinheit 3. Die Auswerteeinheit 3 weist eine Empfangseinheit 4 auf, die die entsprechenden Abstandswerte erfasst und zu einer Bewertungseinheit 5 weiterleitet. Die Bewertungseinheit 5 bewertet vorzugsweise für jeden Abstand zu einem Hindernis, ob es sich hierbei um einen kritischen Abstand handelt. Bevorzugt wird hierbei nicht nur der aktuelle Abstandwert, sondern auch die Änderung des Abstands pro Zeit mitberücksichtigt. Wird ein vorgegebener Mindestabstand zu einem Hindernis unterschritten, so wird an eine Ausgabeeinheit 6 der Befehl ausgegeben, vor diesem Hindernis zu warnen.

Für die akustische Darstellung von Informationen wird erfindungsgemäß die aus der Musikwissenschaft bekannte Eigenschaft von Dissonanzen und Konsonanzen ausgenutzt. Dissonanzen oder unvollkommene Konsonanzen werden von einem Hörer als nicht passend oder falsch bzw. unangenehm klingend empfunden. Entsprechend der Proportionstheorie lassen sich Frequenzintervalle von Konsonant nach dissonant wie folgt ordnen: Prim 1:1, Oktav 1:2, Quinte 2:3, Quarte 3:4, große Sexte 3:5, große Terz 4:5, kleine Terz 5:6, kleine Sexte 5:8, kleine Septime 5:9, große Sekunde 8:9, große Septime 8:15, kleine Sekunde 24:25, Tritonus 32:45.

Für entsprechend abgestufte Meldungen lassen sich entsprechend der Proportionstheorie jeweils Frequenzintervalle aus der oben angegebenen Liste entnehmen. . Die Ausgabe erfolgt dabei in einer ersten Ausführungsform durch einen polyphonen Ton, bei dem zwei reine Frequenzen ausgegeben werden. Es lassen sich jedoch, wie auch bei einem Musikinstrument, Überlagerungen von verschiedenen Haupt- und Nebenschwingungen darstellen, wobei jedoch bevorzugt die Hauptschwingung der beiden benachbarten Töne jeweils das entsprechende Klangintervall angibt. In einer weiteren Ausführungsform kann auch ein Wechsel zwischen zwei Tönen erfolgen, die das entsprechende Intervall einschließen. In einer weiteren Ausführungsform kann die oben angeführte Liste auch um entsprechende Akkorde, wie z. B. den Quart-Sext-Akkord, erweitert werden.

Die entsprechende Zuordnung der Tonfolgen zu den Kritizitätswerten ist bevorzugt in der Ausgabeeinheit 6 abgelegt. Entweder sind die Töne in einer dafür vorgesehenen Speichereinheit gespeichert, z.B. als Klangdatei oder als Musikdatei, oder werden durch ein entsprechendes elektronisches Bauteil als Signal erzeugt. Das Signal wird an die Lautsprechereinheit 7 zur akustischen Ausgabe ausgegeben.

Eine Verwendung des erfindungsgemäßen Verfahrens ist anhand der Figur 2 dargestellt. Ein Kraftfahrzeug 10 fährt auf einer Straße an einem ersten Fahrzeug 11 und einem zweiten Fahrzeug 12 vorbei, die beabstandet zueinander an einem Straßenrand 13 parken. Zwischen den Fahrzeugen 11, 12 befindet sich eine Parklücke, die durch eine Pfeildarstellung 14 in der Figur 2 skizziert ist. An der rechten Fahrzeugseite des Kraftfahrzeugs 10 sind Abstandsmesssensoren 15 angeordnet, die bei einer Vorbeifahrt mittels einer Abstandmessung feststellen, wenn eine Lücke zwischen den Fahrzeugen 11, 12 vorliegt. Durch eine in der Figur 2 nicht dargestellte Recheneinheit wird unter Zugriff auf eine Wegstreckenmessung mittels eines ebenfalls nicht dargestellten Wegstreckensensors die Länge der Parklücke bei der Vorbeifahrt an den Fahrzeugen 11, 12 und der Parklücke 14 in Pfeilrichtung 16 ermittelt. Bei der Vorbeifahrt an der Parklücke befindet sich das Kraftfahrzeug 10 nach wie vor im fließenden Verkehr, sodass der Fahrer im Wesentlichen auf den ihn umgebenden Verkehr achten muss. Mit dem erfindungsgemäßen Verfahren wird ihn nun ausgegeben, ob die Parklücke, an der er vorbeigefahren ist, für ein Einparken geeignet ist.

Entsprechend der Bewertung der Parklücke nimmt die für den Fahrer des Fahrzeugs relevante Kritizität der Situation gemäß der folgenden Aufstellung zu: Parklücke passt in jedem Fall, Parklücke wird im Allgemeinen passen, Parklücke ist recht knapp, Parklücke passt nicht.

Würde der Fahrer z. B. versuchen, in eine nicht passende Parklücke einzufahren, so könnte er einerseits die parkenden Fahrzeuge beschädigen und würde andererseits eine gefährliche Situation dahingehend provozieren, dass er im fließenden Verkehr in die Parklücke zurückstoßen müsste, dies ihm aber nicht gelingen würde. Passt die Parklücke in jedem Fall, so wird das Einparken problemlos sein und er sehr schnell in die Parklücke einfahren können. Daher erfolgt eine akustische Ausgabe bei einer passenden Parklücke z. B. mittels einer Prim, während bei einer im Allgemeinen passenden Parklücke eine Quarte ausgegeben wird. Ist die Parklücke knapp, so wird eine große Sekunde ausgegeben. Passt die Parklücke nicht, so wird ein Tritonus ausgegeben. Dies kann einerseits durch zwei aufeinanderfolgende Töne erfolgen. Zudem kann die Tondauer des entsprechenden Tones in diesem Fall länger werden, je länger die Parklücke ist. Dabei sollte jedoch eine Mindestzeit von einer Sekunde vorgegeben sein, sodass ein Fahrer insbesondere einen Warnton deutlich hören kann. Zudem kann auch die Tonhöhe verändert werden, in der das Intervall ausgegeben wird. Da Objekte mit tieferen Frequenzen im Allgemeinen als "größer" wahrgenommen werden, kann die Oktavenhöhe in Abhängigkeit von der Parklücke gewählt werden. Auch kann die Modulationsfrequenz verändert werden, je kleiner die Parklücke ist. Durch die entsprechende akustische Ausgabe kann auf eine Anzeigeeinheit zur Ausgabe der Parklückenbewertung verzichtet werden.

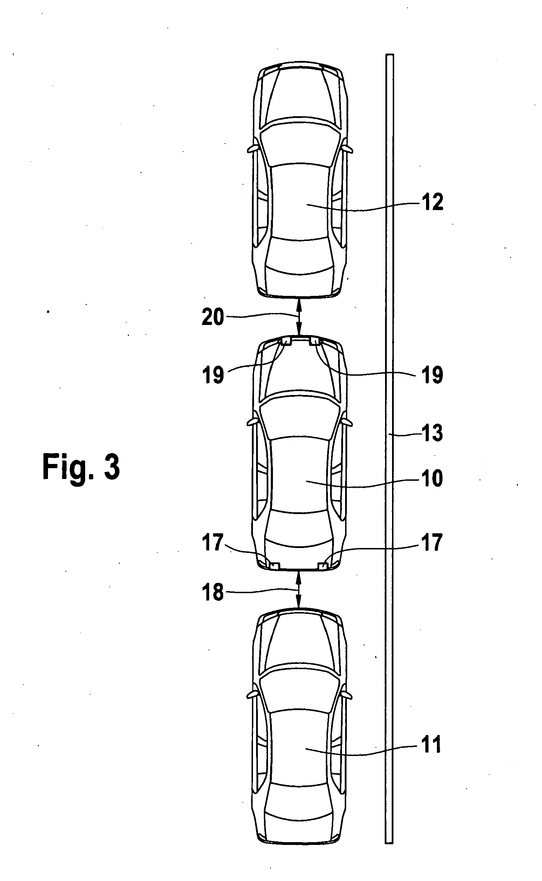

In der Figur 3 ist eine Abstandsmessung dargestellt. Im vorliegenden Fall ist das Fahrzeug 10 bereits in die Parklücke eingefahren, wobei nun in einem ersten Ausführungsbeispiel an der Rückseite des Fahrzeugs angeordnete Sensoren 17 aktiviert werden. Die Sensoren 17 messen einen Abstand zu dem ersten Fahrzeug 11, der ebenfalls durch eine Pfeildarstellung 18 skizziert ist. Für den gemessenen Abstand erfolgt eine Warnung entsprechend der oben ausgegebenen polyphonen Warntöne bzw. der Tonfolgen. In einer weiteren Ausführungsform können auch an der Vorderseite des Fahrzeugs angeordnete Sensoren 19 verwendet werden, die zusätzlich einen Abstand 20 zu dem zweiten Fahrzeug 12 messen. In diesem Fall können für den rückwärtigen Abstand 18 und den vorderen Abstand 20 jeweils selbständig Warnungen ausgegeben werden. Ist der rückwärtige Abstand 18 zu klein, so wird zwar für den vorderen Abstand ein harmonischer Ton ausgegeben, jedoch für den rückwärtigen Abstand 18 ein dissonanter Ton. Umgekehrt gilt dies, wenn der vordere Abstand zu gering, der hintere Abstand aber groß genug ist. Ist es nun die Aufgabe des Fahrers, das Fahrzeug 10 in geeigneter Weise in eine Parkposition zwischen den Fahrzeugen 11, 12 zu positionieren, so erreicht er einen gleichmäßigen Abstand nach vorne und nach hinten, wenn sich die Warntöne in bezug auf die Vorderseite und in bezug auf die Rückseite entsprechen. Er muss damit so lange das Fahrzeug bewegen, bis ein gleicher, möglichst harmonischer Ton für die Vorderseite und die Rückseite ausgegeben wird. Somit kann er rein akustisch eine optimale Parkposition zwischen den beiden Fahrzeugen 11, 12 erfassen.

## Patentansprüche

1. Verfahren zur akustischen Ausgabe einer Information in einem Fahrzeug, wobei ein Grad der Kritizität der Information ermittelt wird, wobei die akustische Ausgabe durch wenigstens einen polyphonen Klang erfolgt, **dadurch gekennzeichnet, dass** eine Information über eine Parklückenlänge ausgegeben wird, dass die Kritizität der Information mit abnehmender Parklückenlänge zunimmt, dass die Harmonie des polyphonen Klangs in Abhängigkeit von der Kritizität der Information gewählt wird und dass mit zunehmender Kritizität eine Dissonanz des ausgegebenen polyphonen Klangs entsprechend einer folgenden Ordnung von Frequenzintervallen von konsonant nach dissonant wie folgt zunimmt: Prim 1:1, Oktav 1:2, Quinte 2:3, Quarte 3:4, große Sexte 3:5, große Terz 4:5, kleine Terz 5:6, kleine Sexte 5:8, kleine Septime 5:9, große Sekunde 8:9, große Septime 8:15, kleine Sekunde 24:25, Tritonus 32:45.

2. Verfahren nach einem der vorherigen Ansprüche, **dadurch gekennzeichnet, dass** mit zunehmender Kritizität der Information eine Wiederholrate, eine Tonhöhe und/oder eine Lautstärke des polyphonen Klangs erhöht wird.

## Claims

1. Method for the audible output of an information item in a vehicle, wherein a degree of criticality of the information item is ascertained, the audible output being effected by at least one polyphonic sound, **characterized in that** an information item about a parking space length is output, **in that** the criticality of the information item increases as the parking space length decreases, **in that** the harmony of the polyphonic sound is chosen on the basis of the criticality of the information item, and **in that**, as criticality increases, a dissonance of the output polyphonic sound increases from consonant to dissonant in line with a successive order of frequency intervals as follows: unison 1:1, octave 1:2, fifth 2:3, fourth 3:4, major sixth 3:5, major third 4:5, minor third 5:6, minor sixth 5:8, minor seventh 5:9, major second 8:9, major seventh 8:15, minor second 24:25, tritone 32:45.

2. Method according to one of the preceding claims, **characterized in that**, as the criticality of the information item increases, a repetition rate, a pitch and/or a volume of the polyphonic sound is increased.

## Revendications

1. Procédé de diffusion sonore d'une information dans un véhicule, un degré d'importance de l'information étant déterminé, la diffusion sonore s'effectuant par le biais d'au moins une sonorité polyphonique, **caractérisé en ce qu'**une information relative à une longueur de place de stationnement est diffusée, que l'importance de l'information augmente à mesure que la longueur de la place de stationnement diminue, que l'harmonie de la sonorité polyphonique est choisie en fonction de l'importance de l'information et qu'une dissonance de la sonorité polyphonique diffusée augmente à mesure que l'importance augmente conformément à un ordre suivant des intervalles de fréquence de la consonance vers la dissonance : fondamentale 1:1, octave 1:2, quinte 2:3, quarte 3:4, grande sixte 3:5, grande tierce 4:5, petite tierce 5:6, petite sixte 5:8, petite septième 5:9, grande seconde 8:9, grande septième 8:15, petite seconde 24:25, triton 32:45.

2. Procédé selon l'une des revendications précédentes, **caractérisé en ce qu'**un taux de répétition, une hauteur de tonalité et/ou un volume sonore de la sonorité polyphonique est accru à mesure que l'importance de l'information augmente.
